Europäisches Patentamt

(19) European Patent Office

Office européen des brevets

(11) Publication number: **0 095 945**
**B1**

# (12) EUROPEAN PATENT SPECIFICATION

(45) Date of publication of patent specification: **29.10.86**

(51) Int. Cl.⁴: **B 23 C 5/06,** B 23 C 5/22

(21) Application number: **83303184.2**

(22) Date of filing: **02.06.83**

(54) Face milling cutter.

(30) Priority: **02.06.82 CA 404331**

(43) Date of publication of application:
**07.12.83 Bulletin 83/49**

(45) Publication of the grant of the patent:
**29.10.86 Bulletin 86/44**

(84) Designated Contracting States:
**BE DE FR GB IT NL SE**

(56) References cited:
**DE-A-1 552 562**
**DE-A-1 931 979**
**FR-A- 477 806**
**GB-A-1 406 997**
**GB-A-2 024 072**
**US-A-3 670 380**
**US-A-3 762 005**
**US-A-4 061 076**

(73) Proprietor: **J.P. TOOL LIMITED**
**4011 Malden Road**
**Windsor Ontario N9C 2G4 (CA)**

(72) Inventor: **Rawle, Ralph H.**
**1820 Bouffard Road**
**Windsor Ontario (CA)**

(74) Representative: **Leale, Robin George et al**
**FRANK B. DEHN & CO. Imperial House 15-19**
**Kingsway**
**London WC2B 6UZ (GB)**

Courier Press, Leamington Spa, England.

## Description

This invention relates to milling cutters and, more particularly to face milling tools primarily for metals.

A typical milling tool comprises a holder securable to the end of a rotating spindle in a predetermined relationship to the axis of rotation thereof and a short cutting edge carried by the holder at a radial distance from the axis of rotation on the side of the holder away from the spindle, so that as the body is rotated by the spindle, the cutting edge describes a circle about the axis of the spindle. All parts of the holder are axially and radially behind the cutting edge so that it is free to engage and machine the surface of a workpiece held in the machine in which the spindle rotates. Since the cutting edge is short it takes a comparatively narrow cut and the tool is used with a transverse feed, i.e. the feed direction is parallel to the machined surface of the workpiece.

It has in the past been proposed to make a tool bit of wafer-like form for a variety off metal cutting tools. In other words, it is bounded by two generally flat parallel end faces and a side wall and has at least one cutting edge formed by part of the edge at the junction of the side wall and at least one of the end faces. It is of a thickness which is small compared to other dimensions and is typically secured detachably to a holder by means transversing a central aperture through it. If such a bit is of simple form and small size, it is cheap to produce and it is therefore economic to throw it away when blunt or worn rather than regrinding it, especially if it can be indexed to bring each of a plurality of cutting edge sections or cutting edges into cutting position.

In general terms, the two surfaces at the junction of which the cutting edge of a metal cutting tool is formed, are (a) the rake face against which the chip impinges and (b) the clearance face which is the face which is closer to the workpiece and which is inclined to the machined surface at a low angle which takes it out of contact with workpiece behind the cut. In the case of a wafer-like cutter as described above, according to the way it is located by the holder and the machine, it is possible for one end face to be the rake face and the side wall to be the clearance face, or for the side wall to be the rake face and the end face to be the clearance face. In the specific case of face milling cutters, nearly always a wafer-like cutter has been located so that the end face is the rake face and the side wall is the clearance face.

Nearly every milling operation consists of an interrupted cut. Normally, each cutting insert is in the cut less than half of the total machining time and, while the insert is in the cut, the thickness of the chip being formed constantly changes because of the dual motion, i.e. cutter rotation and workpiece feed motion, which is characteristic of the milling process. These features of milling operations result in the following cutting conditions:

1. As each insert enters the cut, it is subjected to a mechanical shock load. The magnitude of this shock load depends upon the workpiece material, cutter position, operating conditions and cutter geometry.

2. Cutting forces are cyclical, and are roughly proportional at any position in the cut to the undeformed chip thickness at that position. In a typical milling operation, undeformed chip thickness at insert entry is about 80% of the feed per insert, so forces begin high, build up gradually and finally peak as the insert crosses the feed axis, i.e. the point at which unformed chip thickness is at a maximum. Forces decline throughout the rest of the cut as undeformed chip thickness is constantly reduced. As the insert leaves the cut, forces drop to zero and remain there until the insert enters the cut again on the next spindle revolution.

3. Heat generated in the machining operation is also roughly proportional to the undeformed chip thickness. Thus, it is roughly proportional to the rapidly changing cutting forces. Such rapid changes in generated heat place a severe strain upon the cutting material and can lead to thermal cracking.

As an example of one of the previous milling cutters there can be mentioned the face milling tool described in US—A—3,670,380, issued June 20, 1972. This tool utilizes a single face cutting insert of circular or lobed outline which is utilized essentially as a finishing insert. Thus, the disclosure of that patent points out that if the depth of material to be removed at one pass is greater than the insert can deal with, the holder can also carry one or more roughing bits which precede the circular or lobed insert.

DE—A—1,931,979 describes a milling tool of the type wherein a plurality of cutters extend substantially perpendicularly from the face of a holder, such cutters forming a spiral, stepped configuration.

GB—A—2,024,072 describes a face milling tool comprising a holder securable to the end of a rotatable spindle, a plurality of cutting inserts each having at least one cutting edge and being detachably secured to the end face of said holder at a radial distance from the axis of the spindle, the cutting edges of said inserts extending outwardly of said holder end face such that said cutting edges are free to engage and machine the surface of a workpiece, said inserts being of wafer-like form, means for detachably securing said inserts to said holder through a central axial aperture in said inserts, said securing means lying within the outer end face of each said insert, the cutting edge of each insert being substantially straight and being formed by a portion of an edge at the intersection of the cutter side wall and the end face, each said insert lying at such an angle to the plane of the workpiece that said insert side wall forms a rake face and said outer end face of said insert forms a clearance face making a low angle to the plane of the workpiece disposed perpendicularly to said spindle axis and said straight cutting edge making a small radial shear angle, said inserts being circumferentially spaced around said holder.

It is an object of the present invention to provide a face milling tool of this type which can remove metal from the surface of a workpiece with decreased horsepower requirements and decreased stress on the workpiece and cutting inserts, with resultant greatly increased insert life.

The invention is characterised in that the inserts are axially and radially stepped to form both an axial and radial progression, whereby each insert removes a shallow uniform workpiece chip and the material is removed progressively from the top surface of a workpiece down to a finished surface in controlled, shallow, axial increments.

As stated above, the inserts are circumferentially spaced around the holder and are axially and radially stepped to form both an axial and radial progression. It is an important feature of the present invention that the axial steps between successive inserts be very small. Preferably each axial step is less than about 0.25 mm, with axial steps in the range of 0.05 to 0.13 mm being particularly preferred with cast iron or steel workpieces.

With the axial and radial stepped configuration, a spiralling effect is created with only one insert serving as a finishing insert. The number of inserts required is based on the stock removal and the axial step or chip load. The axial geometry of the inserts is arranged to suit the insert style and the metal being machined and the radial geometry is arranged to eliminate harmonics and minimize breakout.

The milling tool of this invention has a number of advantages over previous systems. For instance, it produces a part with better flatness. It also produces a highly desirable dull, non-glazed finish, as compared with shiny, glazed finishes produced by traditional milling cutters. However, its most important feature is greatly improved tool life. Thus, as many as 10000 workpieces can be machined with one cutting edge using the present invention and this compares with about 1800 workpieces machined with one cutting edge using a traditional milling tool.

Certain preferred embodiments of the invention will be further described with reference to the accompanying drawings in which:

Figure 1 is a plan view from below of a face milling tool of an embodiment of the present invention;

Figure 2 is a side elevation of the milling tool of Figure 1;

Figure 3 is a diagrammatic illustration of a typical prior art cutting insert configuration;

Figure 4 is a perspective illustration of the cutting action shown in Figure 3;

Figure 5 is a schematic illustration of the chip removal using the cutting action of Figures 3 and 4;

Figure 6 is a schematic illustration of the insert arrangement of a previous step-mill;

Figure 7 is a schematic illustration of the chip removal using the cutting action of Figure 6;

Figure 8 is a plan view of a further embodiment of the face milling tool of the present invention;

Figure 9 is a schematic illustration of the chip removal using the cutting tool of Figure 8; and

Figure 10 is a schematic illustration of the cutting action of the present invention on a workpiece.

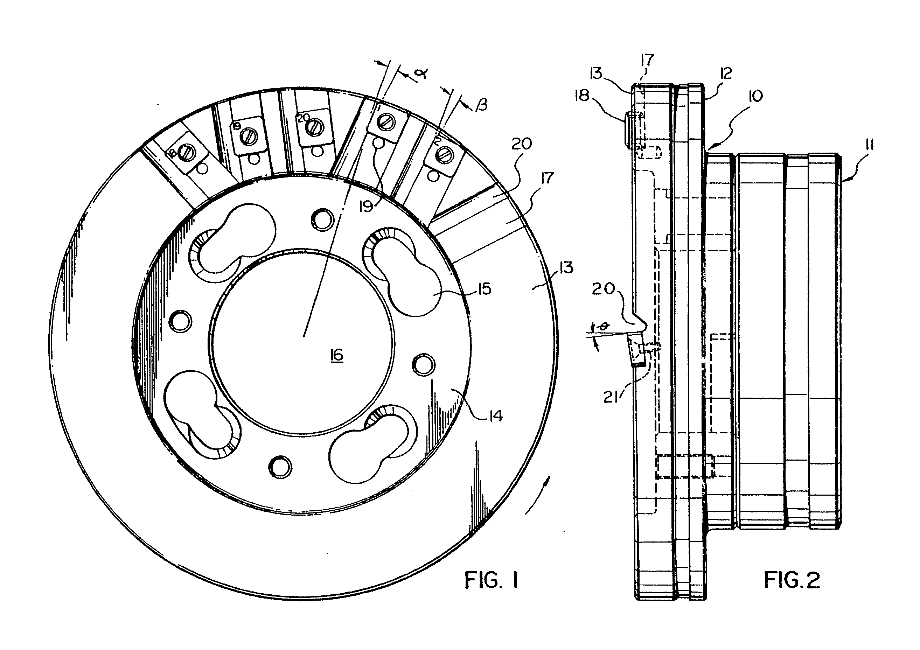

The face milling tool in accordance with the invention shown in Figures 1 and 2 comprises a body or holder 10 mounted on a spindle 11. The holder has a rim portion 12 with an annular face 13, an inwardly stepped annular portion 14 and a central hole 16. The holder 10 is mounted to the spindle 11 by means of studs which pass through the slotted holes 15.

In the annular face 13 are formed a plurality of slots 17 which are adapted to retain cutter inserts 18. An abutment 19 is provided in each slot 17 to precisely control the location of each cutter insert within a slot 17. Immediately forward of each slot 17 is a chip relief groove 20.

Each cutter insert is fixed in position by means of a screw 21.

As will be seen from Figure 2, each insert 18 is set at a rake angle $\theta$ relative to the surface of the workpiece. This angle is typically less than 15° and is usually in the order of about 7°.

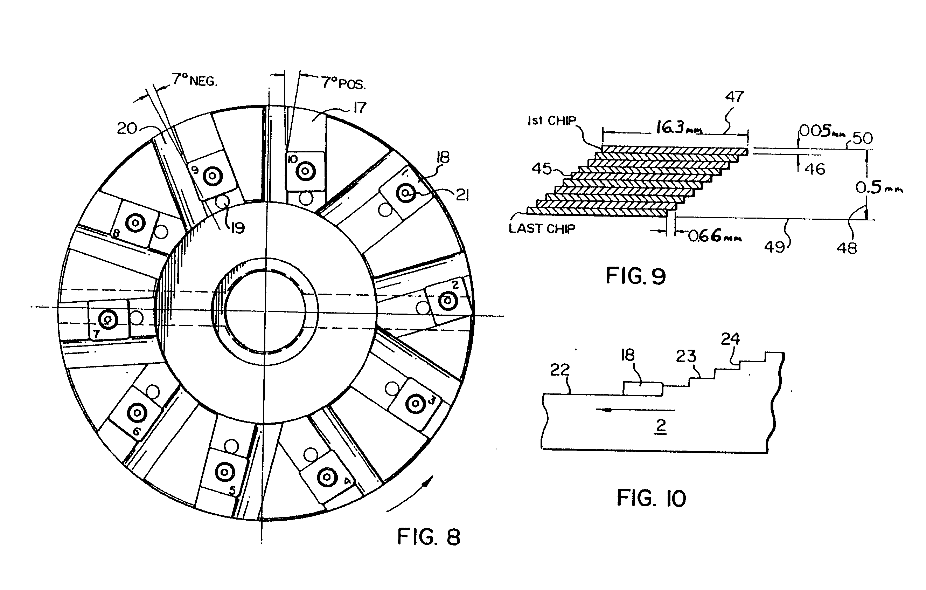

The manner in which the inserts engage the workpiece according to this invention can be seen from Figure 10. One of the group of stepped inserts 18 is shown engaging the workpiece 2 and this is the last or finishing insert which provides the finished surface 22. The other inserts are stepped both axially and radially to provide the stepped cuts each with a wide face 23 parallel to the feed direction and a shallow edge 24 perpendicular to the feed direction. In other words, wide, shallow chips are removed.

The inserts may engage the metal workpiece at either a positive or negative axial rake angle, this depending on the nature of the metal being processed. Such metals may include cast iron, steel, aluminum or magnesium.

The inserts are mounted such that the straight cutting edge makes a small radial shear angle. Preferably these shear angles progressively alternate between small positive and negative angles. These radial shear angles can be seen in Figure 1, with insert 1 being set at a small negative angle $\alpha$ and insert 2 being set at a small positive angle $\beta$. These alternating angles continue through inserts 3 through 20. The angles $\alpha$, $\beta$ can each be up to about 15° with about 7° being ideal.

The inserts can be manufactured from the usual cutting tool materials on the market today, with tungsten carbide being the preferred material. The inserts can come in a variety of shapes and sizes with square, rectangular or triangular being generally preferred. The size of the inserts is generally based on the feed per revolution to fully utilize the available cutting edge. They are also preferably indexable and, for instance, a square insert may have eight cutting edges and preferably has bevelled, radius or sharp corners.

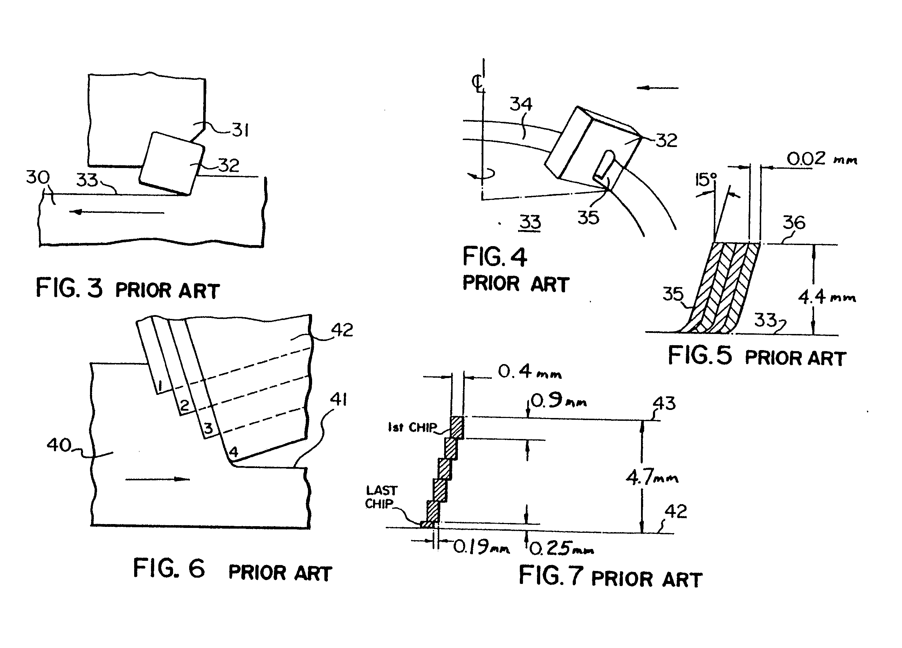

In order to see the advantages of the present invention over the prior art, reference is made to Figures 3 to 7 which illustrate the prior art. Figures 3 and 4 show a cutting insert in operation in a traditional arrangement. Thus, a holder 31 supports an insert 32 set at an angle, with the insert cutting the workpiece 30 in the manner shown in Figure 4 to provide a finished face 33. It will be seen from these Figures that the insert 32 is cutting in primarily a radial direction so that a deep chip 35 is being removed along the cutting face 34.

With a typical milling tool arranged in the above manner having 8 teeth mounted in the holder, the chip removal was as shown in Figure 5. The spindle was rotated at 280 rpm giving a cutter rate of 134 surface meters per minute. With this arrangement the workpiece could be fed at a feed rate of 1.6 mm per revolution or 0.2 mm per insert with a depth of cut of 4.4 mm. As seen in Figure 5, the feed per insert is the thickness of a chip 35 and the depth of cut is the distance between the finished face 33 and the top surface of the metal to be removed 36. This provided a workpiece feed rate of 45.5 cm per minute.

Another form of known milling tool is illustrated in Figure 6 and this is a so-called "step mill". In this arrangement the cutting inserts 42 are not tracked evenly, but stepped radially and axially. The stepped arrangement is designated by the numerals 1, 2, 3 and 4, showing four of the six steps. Such an arrangement is recommended for applications requiring larger depth of cut at reduced horsepower consumption. Each insert 42, being individually stepped in a radial and axial direction, provides uniform chip distribution and free cutting, while reducing work hardening. These step cutters can be used on all types of milling machines, but have been found to be especially effective on lower horsepower machines. However, they utilize the same chip removal action as is shown in Figures 3—5 with the inserts 42 cutting the workpiece 40 in a radial direction to provide the finished face 41 and they suffer from the very serious disadvantage of requiring a very slow workpiece feed rate.

A typical step mill of the above type having six teeth was operated at 280 rpm, giving a surface meters per minute of 134. With this arrangement there was a feed rate in m.m. per revolution of 0.4, and for a total depth of cut of 4.7 mm, it was possible to operate at a feed rate of only 11.4 cm per minute. As will be seen in Figure 7, each of the first five chips has a thickness of 0.9 mm, while the last chip has a thickness of 0.25 mm, giving the total depth of cut of 4.7 mm between the top surface of the material to be removed 43 and the finished surface 42. The length of each chip was 0.4 mm and the radial stagger was 0.2 mm.

Another unit according to this invention was utilized of the type shown in Figures 1 and 2 but with 10 equally spaced inserts as shown in Figure 8. Square inserts were used which were 19 mm square, 7.9 mm thick and with 0.8 mm radius corners. The inserts were mounted at a rake angle of 7° and alternating negative and positive radial shear angles of 7°. The inserts were axially stepped by a distancs of 0.05 mm and radially stepped by an amount of 2.3 mm. The ten stepped inserts are shown by the numerals 1—10 with insert #1 removing the first chip and insert #10 removing the last chip. The chip removal is illustrated in Figure 9, from which it will be seen that each chip 45 has a thickness 46 of 0.05 mm and a length 47 of 16.3 mm and the radial step in on the part is 6.6 mm. The total depth of cut 48 between the workpiece finished face 49 and the top surface of the material to be removed 50 is 0.5 mm. This arrangement operated at a feed rate of 366 cm per minute. In other words, it has a feed rate 30 times that of the step cutter of Figure 6 and almost 8 times the rate of the traditional cutter of Figures 3 and 4.

Example

A series of tests were conducted on cast iron workpieces using face milling tools according to the invention of 7.6 cm, 10.2 cm, 12.7 cm and 15.2 cm diameters. They were arranged as follows:

| Dia. | No. of inserts | Rough stock removal | Finish stock removal | Maximum feed/rev. |
|---|---|---|---|---|
| 7.6 cm | 6 | 0.6 mm | 0.3 mm | 8.9 mm |
| 10.2 cm | 8 | 0.8 mm | 0.4 mm | 8.9 mm |
| 12.7 cm | 10 | 1.0 mm | 0.5 mm | 8.9 mm |
| 15.2 cm | 10 | 1.0 mm | 0.5 mm | 16.3 mm |

The results obtained were as follows:

| Dia. | 7.6 cm | 10.2 cm | 12.7 cm | 15.2 cm |
|---|---|---|---|---|
| SMM | 113 | 137 | 136 | 137 |
| RPM | 480 | 430 | 340 | 225 |
| Feed/Rev. | 8.9 mm | 8.9 mm | 8.9 mm | 16.3 mm |
| Feed (cm./min.) | 427 | 382 | 302 | 366 |
| Stock Removal (cu.cm./min.) | 66 | 105 | 130 | 189 |
| H.P. | 2.47 | 5.73 | 5.66 | 6.85 |

The rate of stock removal for a given diameter of holder can be increased by adding a second spiral of cutting inserts such that the inserts are arranged in adjacent radial pairs. For example, in Figure 1 a second spiral of 20 inserts can be arranged radially adjacent the existing spiral of 20 inserts such that each radial slot 17 contains two radially spaced and radially stepped inserts. Such arrangement doubles the number of inserts and thereby doubles the amount of stock removal per revolution. A triple spiral of the above type is also possible.

Another alternative for increasing the rate of stock removal is to divide the spiral of cutting inserts into a plurality of starts in the manner of a multi-start thread. Thus, there can be two or more circumferentially consecutive spirals with the starting insert of each such spiral being spaced 180°, 120° or 90° depending on whether 2, 3 or 4 starts are used. Since each spiral of inserts between starts cuts to the full depth, the multiple starts have the effect of increasing the surface speed of stock removal. Thus, a milling tool with a three-start configuration of inserts will remove stock to a given depth at a surface speed three times that of a single-start spiral arrangement.

## Claims

1. A face milling tool comprising a holder (10) securable to the end of a rotatable spindle (11), a plurality of cutting inserts (18) each having at least one cutting edge and being detachably secured to the end face of said holder at a radial distance from the axis of the spindle, the cutting edges of said inserts extending outwardly of said holder end face (13) such that said cutting edges are free to engage and machine the surface of a workpiece, said inserts (18) being of wafer-like form, means (21) for detachably securing said inserts to said holder through a central axial aperture in said inserts, said securing means (21) lying within the outer end face of each said insert (18), the cutting edge of each insert (18) being substantially straight and being formed by a portion of an edge at the intersection of the cutter side wall and the end face, each said insert (18) lying at such an angle (θ) to the plane of the workpiece (2) that said insert side wall forms a rake face and said outer end face of said insert forms a clearance face making a low angle to the plane of the workpiece (2) disposed perpendicularly to said spindle axis and said straight cutting edge making a small radial shear angle (α, β), said inserts being circumferentially spaced around said holder (10) characterised in that the inserts (18) are axially and radially stepped to form at least one progression, each being both an axial and radial progression, whereby each insert removes a shallow, uniform workpiece chip (45) and the material is removed progressively from the top surface (50) of a workpiece (2) down to a finished surface (49) in controlled shallow axial increments.

2. A face milling tool according to claim 1 wherein each insert (18) is set at a rake angle (θ) of less than about 15°.

3. A face milling tool according to claim 1 or 2 wherein each straight cutting edge forms a radial shear angle (α, β) of less than about 15°.

4. A face milling tool according to claim 1, 2 or 3 wherein the radial shear angles of successive inserts are alternatively positive (β) and negative (α).

5. A face milling tool according to any preceding claim wherein the axial spacing between successive inserts (18) is up to 0.25 mm.

6. A face milling tool according to any preceding claim wherein the axial spacing between successive inserts (18) is in the range of 0.05 to 0.13 mm.

7. A face milling tool according to any preceding claim wherein the inserts (18) are square, each with eight indexable cutting edges.

8. A face milling tool according to any preceding claim wherein the inserts (18) are mounted at a negative rake angle (α).

9. A face milling cutter according to any preceding claim wherein the inserts (18) are arranged in at least one spiral configuration on said end face (13).

10. A face milling cutter according to any preceding claim wherein the inserts (18) are arranged in mutiple circumferentially consecutive spirals, each having a starting insert.

11. A face milling cutter according to any

5

preceding claim wherein the cutting edge of each insert (18) lies in a plane which is perpendicular to the axis of rotation so as to form chips of uniform thickness.

**Patentansprüche**

1. Planfräser mit einem am Ende einer drehbaren Spindel (11) festlegbaren Halter (10), in dessen Stirnfläche mehrere plättchenförmige Schneideinsätze (18) lösbar befestigt sind, die in einem radialen Abstand von der Spindelachse mit Umfangsabstand voneinander um den Halter (10) herum angeordnet sind und jeweils eine mittige Axialöffnung für den Durchtritt von in der äußeren Stirnfläche jedes Schneideinsatzes (18) liegenden Befestigungsmitteln (21) sowie jeweils zumindest eine Schneidkante aufweisen, die im wesentlichen gerade ist, durch einen Randabschnitt im Schnittbereich der Scheideinsatz-Seitenwandung mit der Schneideinsatz-Stirnfläche gebildet wird, einen kleinen radialen Scherwinkel (α, β) bildet und die Stirnfläche (13) des Halters zur Beaufschlagung und Bearbeitung der Oberfläche eines Werkstückes überragt, wobei jeder Schneideinsatz (18) unter einem solchen Winkel (θ) zu der senkrecht zur Spindelachse liegenden Ebene des Werkstückes (2) liegt, daß die genannte Seitenwandung jedes Schneideinsatzes eine Spanfläche und die genannte äußere Stirnfläche jedes Schneideinsatzes ein Freifläche bilden, die einen unteren Winkel zu der genannten Werkstückebene bildet, dadurch gekennzeichnet, daß die Schneideinsätze (18) axial und radial abgestuft sind, um zumindest eine Abstufung zu bilden, die jeweils eine axiale und radiale Abstufung ist, wobei jeder Schneideinsatz einen flachen, gleichmäßigen Werkstückspan (45) abträgt, und das Material fortschreitend von der unbearbeiteten Oberfläche (50) des Werkstückes (2) bis herunter zu der fertig bearbeiteten Oberfläche (49) in gesteuerten flachen Axialschritten abgetragen wird.

2. Planfräser nach Anspruch 1, dadurch gekennzeichnet, daß jeder Schneideinsatz (18) unter einem Spanwinkel (θ) von kleiner etwa 15° eingesetzt ist.

3. Planfräser nach Anspruch 1 oder 2, dadurch gekennzeichnet, daß jede gerade Schneidkante einen radialen Scherwinkel (α, β) kleiner etwa 15° bildet.

4. Planfräser nach Anspruch 1, 2 oder 3, dadurch gekennzeichnet, daß die radialen Scherwinkel aufeinanderfolgender Schneideinsätze abwechselnd positiv (β) und negativ (α) sind.

5. Planfräser nach einem der vorhergehenden Ansprüche, dadurch gekennzeichnet, daß der axiale Abstand zwischen aufeinanderfolgenden Schneideinsätzen (18) bis zu 0,25 mm beträgt.

6. Planfräser nach einem der vorhergehenden Ansprüche, dadurch gekennzeichnet, daß der axiale Abstand zwischen aufeinanderfolgenden Schneideinsätzen (18) im Bereich von 0,05 bis 0,13 mm liegt.

7. Planfräser nach einem der vorhergehenden Ansprüche, dadurch gekennzeichnet, daß die Schneideinsätze (18) quadratisch ausgebildet sind und jeweils acht Wendeschneidkanten aufweisen.

8. Planfräser nach einem der vorhergehenden Ansprüche, dadurch gekennzeichnet, daß die Schneideinsätze (18) unter einem negativen Spanwinkel (α) eingebaut sind.

9. Planfräser nach einem der vorhergehenden Ansprüche, dadurch gekennzeichnet, daß die Schneideinsätze (18) auf der genannten Stirnfläche (13) in zumindest einer Spiralkonfiguration angeordnet sind.

10. Planfräser nach einem der vorhergehenden Ansprüche, dadurch gekennzeichnet, daß die Schneideinsätze (18) in mehreren, in Umfangsrichtung aufeinanderfolgenden Spiralen angeordnet sind, von denen jede einen Starteinsatz aufweist.

11. Planfräser nach einem der vorhergehenden Ansprüche, dadurch gekennzeichnet, daß die Schneidkante jedes Schneideinsatzes (18) in einer Ebene senkrecht zur Rotationsachse liegt, um so Späne gleicher Dicke zu erzeugen.

**Revendications**

1. Une fraise à surfacer comprenant un support (10) pouvant être fixé sur l'extrémité d'une broche tournante (11), plusieurs inserts de coupe (18) comportant chacun au moins une arête de coupe et fixés de façon séparable sur la face extrême dudit support à distance radiale de l'axe de la broche, les arêtes de coupe desdits inserts s'étendant vers l'extérieur de ladite face extrême (13) du support de manière que lesdites arêtes de coupe soient libres d'entrer en contact avec et d'usiner la surface d'une pièce, lesdits inserts (18) ayant une forme de plaquette, des moyens (21) pour fixer de façon séparable lesdits inserts sur ledit support par l'intermédiaire d'un trou axial central ménagé dans lesdits inserts, lesdits moyens de fixation étant situés à l'intérieur de la face extrême extérieure de chaque insert (18), l'arête de coupe de chaque insert (18) étant sensiblement droite et étant formée par une partie d'un bord à l'intersection de la paroi latérale d'insert et de la face extrême, chaque insert (18) faisant avec le plan de la pièce (2) un angle (θ) tel que ladite paroi latérale d'insert forme une face d'attaque et ladite face extrême extérieure dudit insert forme une face de dépouille faisant un petit angle avec un plan de la pièce (2) disposé perpendiculairement audit axe de broche, et ladite arête de coupe droite faisant un petit angle de cisaillement radial (α, β), lesdits inserts étant répartis circonférentiellement autour dudit support (10), caractérisée en ce que les inserts (18) sont étagés axialement et radialement de façon à former au moins une progression, chacune étant à la fois une progression axiale et radiale, de façon que chaque insert enlève sur la pièce un copeau uniforme peu épais (45) et que la matière soit enlevée progressivement depuis la surface supérieure (50) d'une pièce (2) en profondeur jusqu'à une surface finie (49) par incréments de petite profondeur axiale contrôlés.

2. Une fraise à surfacer selon la revendication 1, dans laquelle chaque insert (18) est réglé à un angle d'attaque (θ) inférieur à environ 15°.

3. Une fraise à surfacer selon la revendication 1 ou 2, dans laquelle chaque arête de coupe rectiligne fait un angle de cisaillement radial (α, β) inférieur à environ 15°.

4. Une fraise à surfacer selon la revendication 1, 2 ou 3, dans laquelle les angles de cisaillement radial d'inserts successifs sont alternativement positifs (β) et négatifs (α).

5. Une fraise à surfacer selon une quelconque des revendications précédentes, dans laquelle l'espacement axial entre des inserte successifs (18) s'élève jusqu'à 0,25 mm.

6. Une fraise à surfacer selon une quelconque des revendications précédentes, dans laquelle l'espacement axial entre des inserts successifs (18) rentre dans la gamme comprise entre 0,05 et 0,13 mm.

7. Une fraise à surfacer selon une quelconque des revendications précédentes, dans laquelle les inserts (18) sont carrés et comportent chacun huit arêtes de coupe indexables.

8. Une fraise à surfacer selon une quelconque des revendications précédentes, dans laquelle les inserts (18) sont montés avec un angle d'attaque négatif (α).

9. Une fraise à surfacer selon une quelconque des revendications précédentes, dans laquelle les inserts (18) sont répartis dans au moins une configuration en spirale sur ladite face extrême (13).

10. Une fraise à surfacer selon une quelconque des revendications précédentes, dans laquelle les inserts (18) sont répartis en spirales multiples circonférentiellement consécutives et comportant chacune un insert de départ.

11. Une fraise à surfacer selon une quelconque des revendications précédentes, dans laquelle l'arête de coupe de chaque insert (18) s'étend dans un plan qui est perpendiculaire à l'axe de rotation de façon à former des copeaux d'épaisseur uniforme.

FIG.2

FIG.1

FIG. 3 PRIOR ART

FIG. 4 PRIOR ART

15°

0.02 mm

36

4.4 mm

33

FIG. 5 PRIOR ART

FIG. 6 PRIOR ART

0.4 mm

0.9 mm

43

1st CHIP

4.7mm

LAST CHIP

42

0.19mm 0.25mm

FIG. 7 PRIOR ART

0 095 945

7° NEG.    7° POS.

FIG. 8

1st CHIP    16.3mm    47    .005mm    50

45    46

LAST CHIP    0.66mm    49    48    0.5mm

FIG. 9

22    18    23    24

2

FIG. 10